(19) Europäisches Patentamt
European Patent Office
Office européen des brevets

(11) **EP 1 892 175 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
*B62D 6/00* (2006.01)     *B60T 8/172* (2006.01)
*B60T 8/1755* (2006.01)

(21) Anmeldenummer: **06119346.2**

(22) Anmeldetag: **23.08.2006**

(54) **Verfahren und Vorrichtung zur Gierraten-Regelung in einem Kraftfahrzeug**

Process and product for controlling the yaw rate in a motor vehicle

Procédé et produit pour contrôler la vitesse de lacet dans une automobile

(84) Benannte Vertragsstaaten:
**DE FR GB**

(43) Veröffentlichungstag der Anmeldung:
**27.02.2008 Patentblatt 2008/09**

(73) Patentinhaber: **Ford Global Technologies, LLC Dearborn, MI 48126 (US)**

(72) Erfinder: **Burgio, Gilberto 52080, Aachen (DE)**

(74) Vertreter: **Drömer, Hans-Carsten Ford-Werke Aktiengesellschaft Patentabteilung NH/DRP Henry-Ford-Strasse 1 50725 Köln (DE)**

(56) Entgegenhaltungen:
**EP-A2- 0 775 617     EP-A2- 1 304 270**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Gierraten-Regelung in einem Kraftfahrzeug.

Aus EP 0 775 617 A2 ist eine Vorrichtung zur Gierraten-Regelung bekannt, welche eine Reibungskoeffizienten-Erfassungseinrichtung und eine Reibungskoeffizienten-Korrektureinrichtung zur Korrektur des von der Reibungskoeffizienten-Erfassungseinrichtung erfassten Reibungskoeffizienten aufweist. Die Vorrichtung weist ferner eine Fahrzustand-Abschätzungseinrichtung auf, welche in Zeitintervallen einen abgeschätzten Fahrzeugdriftwinkel und eine abgeschätzte Gierrate auf Basis der zuvor korrigierten Reibungskoeffizienten ermittelt.

Ein wesentliches Problem bei gegenwärtig verfügbaren Systemen zur Regelung des Fahrverhaltens und insbesondere der Gierrate in einem Kraftfahrzeug bildet die Robustheit des Fahrverhaltens in Bezug auf Veränderungen der Reifeneigenschaften. Herkömmlicherweise wird etwa die Abstimmung des Fahrverhaltens so gewählt, dass die Fahrzeugstabilität unter allen Umständen gewährleistet bleibt, wobei jedoch Kompromisse hinsichtlich des Fahrverhaltens eingegangen werden. So führt etwa eine für eine glatte oder rutschige Fahrbahnoberfläche optimierte Abstimmung zu einem auf trockenem Asphalt zu weichen und unzureichenden Fahrverhalten. Darüber hinaus variieren die zwischen den Reifen und der Fahrbahn auftretenden Kräfte auch stark in Abhängigkeit von dem Reifenverschleiß sowie dem Reifentyp der - u. U. häufig gewechselten - Reifen, was dann eine wiederholte Abstimmung der Fahrzeugstabilitätsregelung erfordert.

Vor dem obigen Hintergrund ist es eine Aufgabe der vorliegenden Erfindung, ein Verfahren und eine Vorrichtung zur Gierraten-Regelung in einem Kraftfahrzeug bereitzustellen, durch das bzw. mit der eine erhöhte Robustheit im Hinblick auf die Reifeneigenschaften erzielt wird.

Diese Aufgabe wird durch das Verfahren gemäß den Merkmalen des unabhängigen Anspruchs 1 sowie die Vorrichtung gemäß den Merkmalen des unabhängigen Anspruchs 9 gelöst.

Ein erfindungsgemäßes Verfahren zur Gierraten-Regelung in einem Kraftfahrzeug mit einer Vorderachse und wenigstens einer Hinterachse weist folgende Schritte auf:

- Abschätzen eines ersten, für die Reifeneigenschaften der auf der Vorderachse befindlichen Reifen charakteristischen Parameters und eines zweiten, für die Reifeneigenschaften der auf der Hinterachse befindlichen Reifen charakteristischen Parameters; und

- Regeln der Gierrate mittels folgender Regelungsvorschrift:

$$F_{yf} = \frac{1}{\hat{\mu}_f l_f}\left(l_r \hat{\mu}_r F_{yr}(.) + Jv\right)$$

bei Vorderradlenkung,
bzw.

$$F_{yr} = \frac{1}{\hat{\mu}_r l_r}\left(l_f \hat{\mu}_f F_{yf}(.) - Jv\right)$$

bei Hinterradlenkung,
wobei jeweils gilt:

$$v = \dot{v}_{\psi d} + \alpha(v_{\psi d} - v_\psi)\,.$$

Dabei bezeichnen:

$F_{yf}, F_{yr}$     die vordere bzw. hintere Querkraft;

$\hat{\mu}_f, \hat{\mu}_r$     den Schätzwert des für die Reifeneigenschaften der auf der Vorderachse bzw. Hinterachse befindlichen Reifen charakteristischen Parameters;

$l_f$, $l_r$       die vordere und hintere Fahrzeuglänge;

$J$       das Trägheitsmoment des Fahrzeugs [kg m$^2$];

$v$       die Geschwindigkeit des Fahrzeugs [m/s];

$v_\psi$       die Giergeschwindigkeit des Fahrzeugs [m/s];

$\psi d$       die Referenzgiergeschwindigkeit des Fahrzeugs [m/s]; und

$\alpha$       den Abstimmungsparameter ("tuning parameter").

Der Abstimmparameter ("tuning parameter") $\alpha$ (auch $K_P$ genannt) wird gemäß der erforderlichen Ansprech- bzw. Reaktionszeit des Systems gewählt.

Dabei geht die Erfindung davon aus, dass die Reifeneigenschaften grundsätzlich bis auf einen multiplikativen Faktor für jede Fahrzeugachse bekannt sind. Dieser multiplikative Faktor wird für die vordere Fahrzeugachse mit $\mu_f$ und für die hintere Fahrzeugachse mit $\mu_r$ bezeichnet. Über diese Faktoren $\mu_f$ und $\mu_r$ können extreme Veränderungen der Fahrbahnreibungseigenschaften (z.B. nasse, vereiste Fahrbahn) berücksichtigt werden, wobei beide multiplikative Faktoren $\mu_f$ und $\mu_r$ unter solchen Umständen in der Regel in ähnlicher Weise variieren. Des Weiteren können Veränderungen der multiplikativen Faktoren $\mu_f$ und $\mu_r$ aufgrund von Reifenverschleiß oder infolge eines Reifenwechsels berücksichtigt werden (wobei bei einem solchen Reifenwechsel i. d. R. ein Austausch mit einem Reifen erfolgt, dessen Merkmale dem ursprünglichen Reifen ähnlich sind).

Die erfindungsgemäß eingesetzte Vorrichtung zur Gierraten-Regelung wird in ihrem Design so ausgelegt, dass sie eine Parameterabhängigkeit von für die Reifeneigenschaften charakteristischen, multiplikativen Faktoren aufweist. Es wird ein Online-Estimationsalgorithmus vorgeschlagen, welcher von dem Nachführungsfehler ("tracking-error"), dem Fahrzeugzustand und weiteren Eingabegrößen abhängt. Da die Quergeschwindigkeit im Allgemeinen nicht gemessen wird, wird zur Auswertung der Querdynamik des Fahrzeugs ein State Estimator verwendet, welcher unter Verwendung herkömmlicher Filtertechnologien ausgebildet sein kann.

Bei den erfindungsgemäß zur Regelung der Gierrate eingesetzten Aktoren kann es sich sowohl um Aktoren für die Querkräfte (Lenkung) als auch, gegebenenfalls auch zusätzlich, um Aktoren für die longitudinalen Kräfte (Bremsen, Differentiale) handeln.

Gemäß einer bevorzugten Ausführungsform werden die Schätzwerte $\hat{\mu}_f$ und $\hat{\mu}_f$ der für die Reifeneigenschaften der auf der jeweiligen Achse befindlichen Reifen charakteristischen Parameter gemäß folgender Gleichungen ermittelt:

$$\begin{cases} \dot{\hat{\mu}}_f = -e_{v\psi} \dfrac{F_{yf}l_f}{J} = -e_{v\psi}\, W_f \\[2mm] \dot{\hat{\mu}}_r = e_{v\psi} \dfrac{F_{yr}l_r}{J} = e_{v\psi}\, W_r \end{cases}$$

Dabei bezeichnen:

$e_{v\psi}$       den Nachführfehler (= $v_{\psi d}$ - $v_\psi$ ; "tracking error");
$W_f$, $W_r$       den Regressor für Vorderrad- bzw. Hinterradlenkung.

Gemäß einer bevorzugten Ausführungsform wird der Schätzwert des jeweils aktuellen Reibungskoeffizienten der Reifen unter Auswertung des Mittelwertes der multiplikativen Faktoren für die Vorderreifen und die Hinterreifen gemäß folgender Gleichung

$$\hat{\mu} = \frac{\hat{\mu}_f + \hat{\mu}_r}{2}$$

ermittelt und als Schätzwert für den gegenwärtig maximalen Reibungskoeffizienten der Reifen angenommen.

Gemäß einer bevorzugten Ausführungsform wird der Schätzwert des jeweils aktuellen Reibungskoeffizienten der Reifen verwendet, um den Sollwert der Gierrate sowie die für den Fahrzeugzustand charakteristischen Schätzwerte "online" einzustellen. Vorzugsweise erfolgt dies nach Durchführung einer geeigneten Filterung.

Gemäß einer bevorzugten Ausführungsform erfolgt die Abschätzung der für den Reifenzustand charakteristischen Parameter gemäß der Gleichung

$$\frac{\hat{\mu}_f}{\mu_f}\dot{v}_\psi = v + (\hat{\mu}_r - \mu_r \frac{\hat{\mu}_f}{\mu_f})\frac{l_r F_{yr}(.)}{J}.$$

Weitere Ausgestaltungen der Erfindung sind der Beschreibung sowie den Unteransprüchen zu entnehmen.

Die Erfindung wird nachstehend anhand einer bevorzugten Ausführungsform unter Bezugnahme auf die beigefügte Abbildung erläutert.

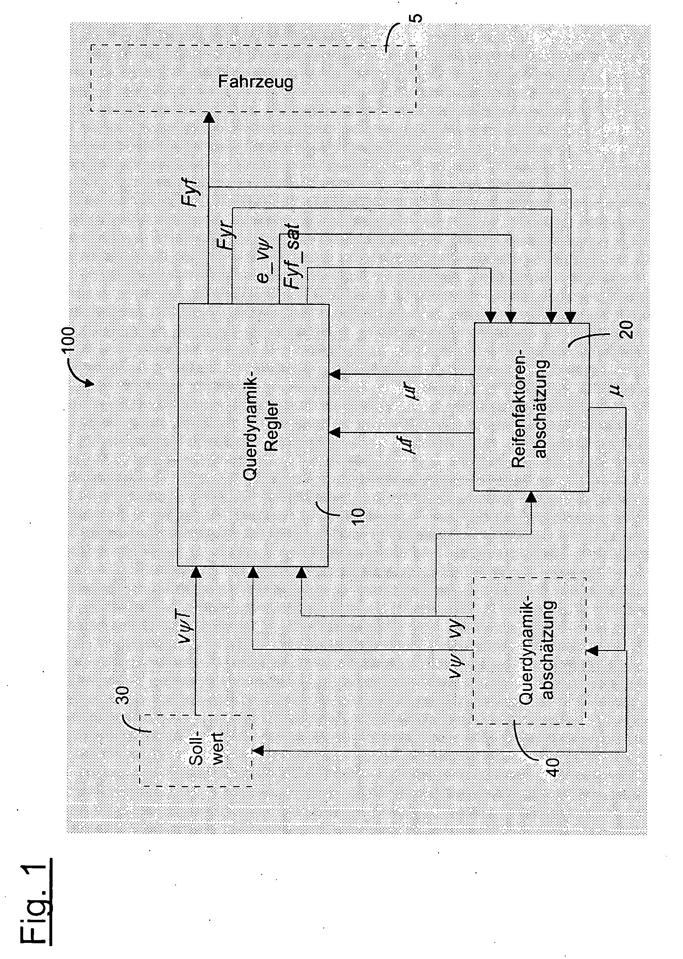

Die einzige Figur 1 zeigt ein Blockdiagramm eines adaptiven Gierraten-Reglers gemäß der vorliegenden Erfindung.

Erfindungsgemäß wird die Fahrzeugdynamik über folgendes Gleichungssystem beschrieben:

$$P: \begin{cases} \dot{v}_y = -v_x v_\psi + \dfrac{1}{m}\left(\mu_f F_{yf}(.) + \mu_r F_{yr}(.)\right) \\[2mm] \dot{v}_\psi = \dfrac{1}{J}\left(\mu_f F_{yf}(.)l_f - \mu_r F_{yr}(.)l_r\right) \end{cases} \qquad (1)$$

Dabei bezeichnen:

m  die Fahrzeugmasse [kg];

$F_{yf}, F_{yr}$  die vordere bzw. hintere Querkraft;

$\mu_f, \mu_r$  die für die Reifeneigenschaften der auf der Vorderachse bzw. Hinterachse befindlichen Reifen charakteristischen Parameter;

$l_f, l_r$  die vordere und hintere Fahrzeuglänge;

$J$  das Trägheitsmoment des Fahrzeugs [kg m$^2$];

$v_x$  die Längsgeschwindigkeit des Fahrzeugs [m/s];

$v_y$  die Quergeschwindigkeit des Fahrzeugs [m/s];

$v_\psi$  die Giergeschwindigkeit des Fahrzeugs [m/s]; und

$v_{\psi d}$  die Referenzgiergeschwindigkeit des Fahrzeugs [m/s].

Dabei sind die einzigen unbekannten Größen die für die Reifeneigenschaften charakteristischen, multiplikativen Faktoren $\mu_f$ und $\mu_r$. Das Problem besteht somit darin, einen Regler ("Controller") u (x) = $F_{yf}$ (oder u (x) = $F_{yr}$), also einen allgemeinen Aktor für die Vorderradlenkung oder die Hinterradlenkung, zu finden, so dass die folgenden Bedingungen gewährleistet sind:

a) gute Nachführung der Gierrate ("yaw rate tracking"); und
b) Robustheit gegenüber Variationen der für die Reifeneigenschaften charakteristischen, multiplikativen Faktoren $\mu_f, \mu_r$.

Im Folgenden wird der Regler nur für den Fall der Vorderradlenkung hergeleitet (d.h. u (x) = $F_{yf}$), wobei die Anwendung auf den Fall der Hinterradlenkung (d.h. u (x) = $F_{yr}$) analog erfolgt.

Bei dem erfindungsgemäßen Verfahren wird folgende Regelungsvorschrift (FLC= "Feedback Linearisation Control Law") angewendet:

$$F_{yf} = \frac{1}{\hat{\mu}_f l_f}\left(l_r \hat{\mu}_r F_{yr}(.) + Jv\right) \qquad (2)$$

wobei gilt

$$v = \dot{v}_{\psi d} + K_p(v_{\psi d} - v_\psi) \qquad (3)$$

und wobei $\hat{\mu}_f$, $\hat{\mu}_r$ die genauesten vorliegenden Schätzwerte der für die Reifeneigenschaften charakteristischen, multiplikativen Faktoren $\mu_f$, $\mu_r$ darstellen. Diese Schätzwerte werden online aktualisiert, wie im Weiteren detailliert erläutert wird.

Fig. 1 zeigt ein Blockdiagramm einer adaptiven Vorrichtung 100 gemäß der vorliegenden Erfindung zur Gierraten-Regelung in einem Fahrzeug 5. Die Vorrichtung weist einen Querdynamikregler 10 auf, der gemäß den Gleichungen (5) und (6) ausgelegt ist.

$$F_{yf} = \frac{1}{\hat{\mu}_f l_f}\left(l_r \hat{\mu}_r F_{yr}(.) + Jv\right) \qquad (5)$$

$$v = \dot{v}_{\psi d} + \alpha(v_{\psi d} - v_\psi) \qquad (6)$$

Eine Einheit 20 zur Abschätzung von für die Reifeneigenschaften charakteristischen Parametern ist gemäß Gleichung (7) ausgelegt und nur unter der Voraussetzung aktiv, dass Vorderreifen und Hinterreifen sich nicht in Sättigung befinden. Der Sollwert der Gierrate wird mittels einer Einheit 30 zur Bestimmung des Sollwerts der Gierrate ermittelt, und ein Schätzwert der Quergeschwindigkeit wird mittels eines Querdynamik-Estimators 40 (State Estimator, typischerweise unter Verwendung von Messwerten des Lenkwinkels, der Längsgeschwindigkeit, der Gierrate und der Querbeschleunigung) 40 ermittelt. Sowohl die Einheit 30 zur Bestimmung des Sollwerts der Gierrate als auch der Querdynamik-Estimator 40 benötigen eine für den maximalen Reibungskoeffizienten zwischen Reifen und Fahrbahn charakteristische Größe, wozu der in Gleichung (8) definierte Mittelwert zwischen den für die Reifeneigenschaften charakteristischen, multiplikativen Faktoren $\mu_f$, $\mu_r$ dienen kann.

Die Einheit 20 zur Abschätzung der für den Reifenzustand charakteristischen Parameter beinhaltet nachfolgende Gleichungen (7):

$$\begin{cases} \dot{\hat{\mu}}_f = -e_{v\psi}\dfrac{F_{yf} l_f}{J} = -e_{v\psi}\,W_f \\[2mm] \dot{\hat{\mu}}_r = e_{v\psi}\dfrac{F_{yr} l_r}{J} = e_{v\psi}\,W_r \end{cases} \qquad (7)$$

Durch diese Regelungsvorschriften wird erreicht, dass für ein durch das Modell (1) beschriebene Fahrzeug die obigen Bedingungen a) und b) gewährleistet sind, d. h. globale Stabilität, gute Nachführung der Gierrate ("yaw rate tracking") und Robustheit gegenüber Variationen der für die Reifeneigenschaften charakteristischen, multiplikativen Faktoren $\mu_f$ und $\mu_r$. Somit kann erfindungsgemäß die Gierraten-Regelung selbst dann stabil erfolgen, wenn vergleichsweise große Schwankungen in den Werten der für den Reifenzustand charakteristischen Parameter auftreten.

Eine Konvergenz der für den Reifenzustand charakteristischen Parameter gegen die tatsächlichen Werte erfolgt, wenn die Eingabewerte der durch diese Parameter beeinflussten Fahrzeugdynamik entsprechen. Gemäß Gleichung (7) kann eine Aktualisierung der für den Reifenzustand charakteristischen Parameter nur während der Durchführung von Kurvenfahrtmanövern erfolgen. Insbesondere kann eine Aktualisierung des für den Zustand eines Vorderreifens charakteristischen Parameters nur erfolgen, wenn die Vorderreifen einem nicht verschwindenden, lateralen Schlupf ausgesetzt sind, was entsprechend auch für die Hinterreifen gilt.

Die Querkräfte werden über den Lenkvorgang nicht unmittelbar beeinflusst. Daher beinhaltet die erfindungsgemäße Ausgestaltung des Controllers eine (versteckte) Umkehrfunktion. Wenn die Umkehrbarkeit nicht mehr gegeben ist (wenn der Reifen sich in Sättigung befindet), beeinträchtigt dies auch die Aussagekraft des Verfahrens. Wenn die Quergeschwindigkeit einen zu großen Wert erreicht (dieser Fall tritt ein, wenn der Hinterreifen sich in Sättigung befindet), wird das System auch durch Gleichung (1) nicht mehr zutreffend beschrieben. In beiden Fällen wird die Regelung anhand der Regelungsvorschrift (7) unterbrochen bzw. außer Kraft gesetzt.

Durch die Struktur der erfindungsgemäßen Regelung wird auch eine Robustheit gegenüber Schwankungen des für das Trägheitsmoment charakteristischen Parameters $J$ erreicht. Dieser Parameter $J$ geht ebenso wie der maximale Reibungskoeffizient der Reifen in die das Fahrzeugsystem beschreibenden Gleichungen (1) sowohl hinsichtlich der Vorderreifeneigenschaften als auch der Hinterreifeneigenschaften als multiplikativer Faktor ein. Infolgedessen führt eine Variation des Trägheitsmomentes um die z-Achse zu einer hierzu äquivalenten Variation der Abschätzung der für die Reifeneigenschaften charakteristischen, multiplikativen Faktoren $\mu_f$, $\mu_r$, wodurch eine Robustheit der Gierraten-Regelung gewährleistet wird. Die Erfindung zeichnet sich insbesondere dadurch aus, dass sämtliche Parametervariationen, welche sich auf die Gierraten-Regelung auswirken, bei dem erfindungsgemäßen Verfahren bzw. der Vorrichtung direkt oder äquivalent bzw. indirekt berücksichtigt werden.

Unter der Annahme, dass der einzige variable Parameter der Reibungskoeffizient der Reifen ist, kann der Mittelwert der für die Reifeneigenschaften charakteristischen Faktoren

$$\hat{\mu} = \frac{\hat{\mu}_f + \hat{\mu}_r}{2} \qquad\qquad (8)$$

als Schätzwert für diesen Parameter verwendet werden. Wenn der Reibungskoeffizient der Reifen nicht der einzige variable Parameter ist, so gibt der Mittelwert der für die Reifeneigenschaften charakteristischen Faktoren einen guten Anhaltspunkt für Schwankungen des Reibungskoeffizienten zwischen Reifen und Fahrbahn.

Beispielsweise nimmt während eines entgegen dem Uhrzeigersinn erfolgenden Kurvenfahrtmanövers mit Untersteuern (entsprechend einem positivem Fehler bei der Gierraten-Nachführung) der für die Vorderreifeneigenschaften charakteristische Faktor $\mu_f$ ab, und der für die Hinterreifeneigenschaften charakteristische Faktor $\mu_r$ nimmt zu, was zu einem Gesamtanstieg des Querantriebs in der Frontachse führt. Dieser Prozess dauert solange an, bis der Gierraten-Nachführungsfehler verschwindet und die für die Reifeneigenschaften charakteristischen Faktoren nicht mehr aktualisiert werden. Dies gilt jeweils unter der o. g. Voraussetzung, dass die Vorder- und die Hinterreifen sich nicht in Sättigung befinden. Wenn die Gleichung (1) das System korrekt beschreibt, wird ein Gleichgewichtszustand erst erreicht, wenn ein Gleichgewicht zwischen dem für die Vorderreifeneigenschaften charakteristischen Faktor $\mu_f$ und dem für die Hinterreifeneigenschaften charakteristischen Faktor $\mu_r$ gegeben ist. Im Gleichgewichtszustand kann somit, wenn der Vorderreifen sich nicht in Sättigung befindet, ein Gierratenfehler nur aufgrund eines Ungleichgewichtes zwischen der modellhaften Beschreibung des Vorderreifens und des Hinterreifens auftreten, und nicht etwa aufgrund von Variationen der Reibung zwischen Reifen und Fahrbahn (oder des Trägheitsmomentes des Fahrzeuges in z-Richtung), da letztere die für die Reifeneigenschaften charakteristischen multiplikativen Faktoren jeweils in gleiche Richtung bzw. mit gleichem Vorzeichen beeinflusst.

Die Verfahrensweise bei dem Aktor für die Hinterradlenkung erfolgt identisch wie oben für die Vorderradlenkung beschrieben, so dass sich für die Abschätzung der für die Reifeneigenschaften charakteristischen Parameter die identische Vorschrift wie bei der Vorderradlenkung ergibt. Der einzige Unterschied besteht darin, dass der Eingabewert der Regressor $W_r$ und nicht (wie bei Vorderradlenkung) der Regressor $W_f$ ist. Das entsprechende Gleichungssystem lautet

$$\begin{cases} F_{yr} = \dfrac{1}{\hat{\mu}_r l_r}\left(l_f \hat{\mu}_f F_{yf}(.) - Jv\right) \\[2mm] v = \dot{y}_d + \alpha(y_d - y) \\[2mm] \dot{\hat{\mu}}_f = -e_{v\psi}\dfrac{F_{yf}l_f}{J} = -e_{v\psi}W_f \\[2mm] \dot{\hat{\mu}}_r = e_{v\psi}\dfrac{F_{yr}l_r}{J} = e_{v\psi}W_r \end{cases} \qquad (9)$$

Ein standardmäßiges Verfahren zur Bestimmung einer geeigneten Auswahl für die Vorschrift (4) zur Aktualisierung der für die Reifeneigenschaften charakteristischen, multiplikativen Faktoren $\mu_f$, $\mu_r$ beinhaltet es, eine Relation zwischen dem Nachführungsfehler ("tracking error") $V_{\psi d}$-$V_\psi$=$e_{v\psi}$ und dem Fehler $\Phi_{\mu f} = \hat{\mu}_f - \mu_f$, $\Phi_{\mu r} = \hat{\mu}_r - \mu_r$ bei der Abschätzung der für die Reifeneigenschaften charakteristischen, multiplikativen Faktoren $\mu_f$, $\mu_r$ zu bestimmen. Dies erfolgt über Regressoren $W_f$, $W_r$ über die folgende Beziehung

$$\dot{e}_{v\psi} + \alpha e_{v\psi} = \Phi_{\mu f}\frac{F_{yf}l_f}{J} - \Phi_{\mu r}\frac{F_{yr}l_r}{J} = \Phi_{\mu f}W_f - \Phi_{\mu r}W_r \qquad (10)$$

Diese Gleichung bildet somit die Grundlage für die Ableitung der Regelungsvorschrift für die Aktualisierung der für die Reifeneigenschaften charakteristischen, multiplikativen Faktoren $\mu_f$, $\mu_r$.

**Patentansprüche**

1.  Verfahren zur Gierraten-Regelung in einem Kraftfahrzeug mit einer vorzugsweise aktiven Vorderachse und wenigstens einer Hinterachse, wobei ein erster, für die Reifeneigenschaften der auf der Vorderachse befindlichen Reifen charakteristischer Parameter ($\mu_f$) und ein zweiter, für die Reifeneigenschaften der auf der Hinterachse befindlichen Reifen charakteristischer Parameter ($\mu_r$) abgeschätzt werden,
    **dadurch gekennzeichnet, dass**
    das Regeln der Gierrate mittels folgender Regelungsvorschrift

$$F_{yf} = \frac{1}{\hat{\mu}_f l_f}\left(l_r \hat{\mu}_r F_{yr}(.) + Jv\right)$$

bei Vorderradlenkung;
bzw.

$$F_{yr} = \frac{1}{\hat{\mu}_r l_r}\left(l_f \hat{\mu}_f F_{yf}(.) - Jv\right)$$

bei Hinterradlenkung, erfolgt, wobei jeweils gilt:

$$v = \dot{v}_{\psi d} + \alpha(v_{\psi d} - v_\psi),$$

wobei $\hat{\mu}_f$ und $\hat{\mu}_r$ Schätzwerte der für die Reifeneigenschaften der auf der jeweiligen Achse befindlichen Reifen charakteristischen Parameter sind, und wobei

$F_{yf}$, $F_{yr}$ die vordere bzw. hintere Querkraft;
$l_f$, $l_r$ die vordere und hintere Fahrzeuglänge;
$J$ das Trägheitsmoment des Fahrzeugs [kg m$^2$];
$v$ die Geschwindigkeit des Fahrzeugs [m/s];
$v_\psi$ die Giergeschwindigkeit des Fahrzeugs [m/s];
$v_{\psi d}$ die Referenzgiergeschwindigkeit des Fahrzeugs [m/s]; und
$\alpha$ den Abstimmungsparameter ("tuning parameter)

bezeichnen.

2. Verfahren nach Anspruch 1,
**dadurch gekennzeichnet, dass**
die Schätzwerte ($\hat{\mu}_f$, $\hat{\mu}_r$) der für die Reifeneigenschaften der auf der jeweiligen Achse befindlichen Reifen charakteristischen Parameter gemäß folgender Gleichungen ermittelt werden:

$$\begin{cases} \dot{\hat{\mu}}_f = -e_{v\psi} \dfrac{F_{yf} l_f}{J} = -e_{v\psi} W_f \\ \dot{\hat{\mu}}_r = e_{v\psi} \dfrac{F_{yr} l_r}{J} = e_{v\psi} W_r \end{cases} \text{,}$$

wobei

$e_{v\psi}$ den Nachführfehler (= $v_{\psi d}$ - $v_\psi$; "tracking error"), und
$W_f$, $W_r$ den Regressor für Vorderrad- bzw. Hinterradlenkung bezeichnen.

3. Verfahren nach Anspruch 1 oder 2,
**dadurch gekennzeichnet, dass**
ein Mittelwert der für die Reifeneigenschaften der auf der jeweiligen Achse befindlichen Reifen charakteristischen Faktoren gemäß folgender Gleichung

$$\hat{\mu} = \frac{\hat{\mu}_f + \hat{\mu}_r}{2}$$

ermittelt und als Schätzwert für den gegenwärtig maximalen Reibungskoeffizienten der Reifen angenommen wird.

4. Verfahren nach Anspruch 3,
**dadurch gekennzeichnet, dass**
auf Basis dieses Schätzwertes für den gegenwärtig maximalen Reibungskoeffizienten eine Online-Anpassung der Gierrate vorgenommen wird.

5. Verfahren nach einem der vorhergehenden Ansprüche,
**dadurch gekennzeichnet, dass**
die Fahrzeugdynamik des Kraftfahrzeugs (5) über folgendes Gleichungssystem

$$P: \begin{cases} \dot{v}_y = -v_x v_\psi + \dfrac{1}{m}\left(\mu_f F_{yf}(.) + \mu_r F_{yr}(.)\right) \\[2ex] \dot{v}_\psi = \dfrac{1}{J}\left(\mu_f F_{yf}(.)l_f - \mu_r F_{yr}(.)l_r\right) \end{cases}$$

beschrieben wird, wobei

m die Fahrzeugmasse [kg];
$\mu_f$, $\mu_r$ die für die Reifeneigenschaften der auf der Vorderachse bzw. Hinterachse befindlichen Reifen charakteristischen Parameter;
$v_x$ die Längsgeschwindigkeit des Fahrzeugs [m/s]; und
$v_y$ die Quergeschwindigkeit des Fahrzeugs [m/s];

bezeichnen.

6. Verfahren nach einem der vorhergehenden Ansprüche,
   **dadurch gekennzeichnet, dass**
   die Abschätzung der für die Reifeneigenschaften der auf der jeweiligen Achse befindlichen Reifen charakteristischen Parameter gemäß der Gleichungen

$$\begin{cases} \dot{\hat{\mu}}_f = -e_{v\psi}\dfrac{F_{yf}l_f}{J} = -e_{v\psi}W_f \\[2ex] \dot{\hat{\mu}}_r = e_{v\psi}\dfrac{F_{yr}l_r}{J} = e_{v\psi}W_r \end{cases}$$

unterbrochen wird, wenn die Quergeschwindigkeit einen oberen Grenzwert überschreitet, wobei $\hat{\mu}_f$ und $\hat{\mu}_r$ Schätzwerte der für die Reifeneigenschaften der auf der jeweiligen Achse befindlichen Reifen charakteristischen Parameter sind, und wobei

$e_{v\psi}$ den Nachführfehler (= $v_{\psi d}$ - $v_\psi$; "tracking error"), und
$W_f$, $W_r$ den Regressor für Vorderrad- bzw. Hinterradlenkung

bezeichnen.

7. Verfahren nach einem der vorhergehenden Ansprüche,
   **dadurch gekennzeichnet, dass**
   die Abschätzung der der für die Reifeneigenschaften der auf der jeweiligen Achse befindlichen Reifen charakteristischen Parameter gemäß der Gleichungen

$$\begin{cases} \dot{\hat{\mu}}_f = -e_{v\psi}\dfrac{F_{yf}l_f}{J} = -e_{v\psi}W_f \\[2ex] \dot{\hat{\mu}}_r = e_{v\psi}\dfrac{F_{yr}l_r}{J} = e_{v\psi}W_r \end{cases}$$

unterbrochen wird, wenn wenigstens ein Reifen sich in Sättigung befindet, wobei $\hat{\mu}_f$ und $\hat{\mu}_r$ Schätzwerte der für die Reifeneigenschaften der auf der jeweiligen Achse befindlichen Reifen charakteristischen Parameter sind, und wobei

$e_{v_\psi}$ den Nachführfehler (= $v_{\psi d}$ - $v_\psi$; "tracking error"), und
$W_f$, $W_r$ den Regressor für Vorderrad- bzw. Hinterradlenkung

bezeichnen.

**8.** Verfahren nach Anspruch 1,
**dadurch gekennzeichnet, dass**
eine Abschätzung der für die Reifeneigenschaften der auf der jeweiligen Achse befindlichen Reifen charakteristischen Parameter ($\mu_f$, $\mu_r$) anhand der Gleichung

$$\frac{\widehat{\mu}_f}{\mu_f}\dot{v}_\psi = v + (\widehat{\mu}_r - \mu_r\frac{\widehat{\mu}_f}{\mu_f})\frac{l_r F_{yr}(.)}{J}$$

erfolgt, wobei

$\mu_f$, $\mu_r$ die für die Reifeneigenschaften der auf der Vorderachse bzw. Hinterachse befindlichen Reifen charakteristischen Parameter; und
$\hat{\mu}_f$, $\hat{\mu}_r$ den Schätzwert des für die Reifeneigenschaften der auf der Vorderachse bzw. Hinterachse befindlichen Reifen charakteristischen Parameters

bezeichnen.

**9.** Vorrichtung zur Gierraten-Regelung in einem Kraftfahrzeug,
**dadurch gekennzeichnet, dass**
diese Vorrichtung dazu ausgelegt ist, ein Verfahren nach einem der vorhergehenden Ansprüche auszuführen.

## Claims

**1.** Process for controlling the yaw rate in a motor vehicle having a preferably active front axle and at least one rear axle, wherein a first parameter ($\mu_f$) which is characteristic of the tyre properties of the tyres on the front axle and a second parameter ($\mu_r$) which is characteristic of the tyre properties of the tyres on the rear axle are estimated,
**characterized in that**
the yaw rate is controlled by means of the following control rule

$$F_{yf} = \frac{1}{\widehat{\mu}_f l_f}(l_r\widehat{\mu}_r F_{yr}(.) + J\nu)$$

in the case of front wheel steering; or

$$F_{yr} = \frac{1}{\widehat{\mu}_r l_r}(l_f\widehat{\mu}_f F_{yf}(.) - J\nu)$$

in the case of rear wheel steering,
for each of which the following applies:

$$\nu = \dot{\nu}_{\psi d} + \alpha(\nu_{\psi d} - \nu_\psi),$$

wherein

$\hat{\mu}_f$ and $\hat{\mu}_r$ are estimated values of the parameters which are characteristic of the tyre properties of the tyres on the respective axle, and in which the meaning of the symbols is as follows:

$F_{yf}$, $F_{yr}$ the front or rear lateral force;
$l_f$, $l_r$ the front and rear length of the vehicle;
$J$ the moment of mass inertia of the vehicle [kg m$^2$ ];
$v$ the velocity of the vehicle [m/s];
$v_\psi$ the yaw rate of the vehicle [m/s];
$v_{\psi d}$ the reference yaw rate of the vehicle [m/s]; and
$\alpha$ the tuning parameter.

2. Method according to Claim 1,
   **characterized in that**
   the estimated values ($\hat{\mu}_f$, $\hat{\mu}_r$) of the parameters which are characteristic of the tyre properties of the tyres on the respective axle are determined according to the following equations:

$$\begin{cases} \dot{\hat{\mu}}_f = -e_{v\psi}\dfrac{F_{yf}l_f}{J} = -e_{v\psi}\,W_f \\ \dot{\hat{\mu}}_r = e_{v\psi}\dfrac{F_{yr}l_r}{J} = e_{v\psi}\,W_r \end{cases},$$

in which the meaning of the symbols is as follows:

$ev_\psi$ the tracking error (= $v_{\psi d}$ - $v_\psi$), and
$W_f$, $W_r$ the regressor for front wheel steering or, respectively, rear wheel steering.

3. Method according to Claim 1 or 2,
   **characterized in that**
   a mean value of the factors which are characteristic of the tyre properties of the tyres on the respective axle are determined according to the following equation

$$\hat{\mu} = \frac{\hat{\mu}_f + \hat{\mu}_r}{2}$$

and is assumed as an estimated value for the current maximum coefficient of friction of the tyres.

4. Method according to Claim 3,
   **characterized in that**
   on-line adaptation of the yaw rate is performed on the basis of this estimated value for the current maximum coefficient of friction.

5. Method according to one of the preceding claims,
   **characterized in that**
   the vehicle dynamics of the motor vehicle (5) are described by means of the following equation system

$$P: \begin{cases} \dot{v}_y = -v_x v_\psi + \dfrac{1}{m}(\mu_f F_{yf}(.) + \mu_r F_{yr}(.)\,) \\ \dot{v}_\psi = \dfrac{1}{J}(\mu_f F_{yf}(.)l_f - \mu_r F_{yr}(.)l_r) \end{cases}$$

**EP 1 892 175 B1**

in which the meaning of the symbols is as follows:

m the mass of the vehicle [kg];
$\mu_f$, $\mu_r$ the parameters which are characteristic of the tyre properties of the tyres on the front axle or, respectively, the rear axle;
$v_x$ the longitudinal velocity of the vehicle [m/s]; and
$v_y$ the lateral velocity of the vehicle [m/s].

6. Method according to one of the preceding claims,
   **characterized in that**
   the estimation of the parameters which are characteristic of the tyre properties of the tyres on the respective axle according to the equations

$$\begin{cases} \widehat{\mu}_f = -e_{v\psi}\dfrac{F_{yf}l_f}{J} = -e_{v\psi}\,W_f \\[4mm] \widehat{\mu}_r = e_{v\psi}\dfrac{F_{yr}l_r}{J} = e_{v\psi}\,W_r \end{cases}$$

is interrupted if the lateral velocity exceeds an upper limiting value, wherein $\hat{\mu}_f$ and $\hat{\mu}_r$ are estimated values of the parameters which are characteristic of the tyre properties of the tyres on the respective axle, and in which the meaning of the symbols is as follows:

$e_{v\psi}$ the tracking error (= $v_{\psi d}$ - $v_\psi$), and
$W_f$, $W_r$ the regressor for front wheel steering or, respectively, rear wheel steering.

7. Method according to one of the preceding claims,
   **characterized in that**
   the estimation of the parameters which are characteristic of the tyre properties of the tyres on the respective axle according to the equations

$$\begin{cases} \dot{\hat{\mu}}_f = -e_{v\psi}\dfrac{F_{yf}l_f}{J} = -e_{v\psi}\,W_f \\[4mm] \dot{\hat{\mu}}_r = e_{v\psi}\dfrac{F_{yr}l_r}{J} = e_{v\psi}\,W_r \end{cases}$$

is interrupted if at least one tyre is in the saturated state, wherein $\hat{\mu}_f$ and $\hat{\mu}_r$ are estimated values of the parameters which are characteristic of the tyre properties of the tyres on the respective axle,
and in which the meaning of the symbols is as follows:

$e_{v\psi}$ the tracking error (= $v_{\psi d}$ - $v_\psi$), and
$W_f$, $W_r$ the regressor for front-wheel steering or, respectively, rear-wheel steering.

8. Method according to Claim 1,
   **characterized in that**
   the parameters ($\mu_f$, $\mu_r$) which are characteristic of the tyre properties of the tyres on the respective axle are estimated by means of the equation

$$\frac{\widehat{\mu}_f}{\mu_f}\dot{v}_\psi = v + (\widehat{\mu}_r - \mu_r\frac{\widehat{\mu}_f}{\mu_f})\frac{l_r F_{yr}(.)}{J}$$

in which the meaning of the symbols is as follows:

$\mu_f$, $\mu_r$ the parameters which are characteristic of the tyre properties of the tyres on the front axle or, respectively, the rear axle; and
$\hat{\mu}_f$, $\hat{\mu}_r$ the estimated value of the parameter which is characteristic of the tyre properties of the tyres on the front axle or, respectively, the rear axle.

9. Device for controlling the yaw rate in a motor vehicle,
   **characterized in that**
   this device is designed to carry out a method according to one of the preceding claims.

**Revendications**

1. Procédé de régulation du taux de lacet dans un véhicule automobile comprenant un essieu avant de préférence actif et au moins un essieu arrière, un premier paramètre ($\mu_f$) caractéristique des propriétés des pneumatiques qui se trouvent sur l'essieu avant et un deuxième paramètre ($\mu_r$) caractéristique des propriétés des pneumatiques qui se trouvent sur l'essieu arrière étant estimés, **caractérisé en ce que** la régulation du taux de lacet est réalisée avec la règle de régulation suivante

$$F_{yf} = \frac{1}{\hat{\mu}_f l_f}\left(l_r \hat{\mu}_r F_{yr}(.) + Jv\right)$$

dans le cas d'un changement de direction avec l'essieu avant
ou

$$F_{yr} = \frac{1}{\hat{\mu}_r l_r}\left(l_f \hat{\mu}_f F_{yf}(.) - Jv\right)$$

dans le cas d'un changement de direction avec l'essieu arrière,
avec à chaque fois :

$$v = v_{\psi d} + \alpha\left(v_{\psi d} - v_\psi\right),$$

$\hat{\mu}f$ et $\hat{\mu}r$ étant des valeurs estimées pour les paramètres caractérisant les propriétés des pneumatiques qui se trouvent sur l'essieu correspondant et
*Fyf, Fyx* désignant la force transversale avant ou arrière ;
*lf, lr* désignant la longueur avant et arrière du véhicule ;
*J* désignant le moment d'inertie du véhicule (kg m$^2$) ;
*v* désignant la vitesse du véhicule (m/s) ;
$v_\psi$ désignant la vitesse de lacet du véhicule (m/s) ;
$v_{\psi d}$ désignant la vitesse de lacet de référence du véhicule (m/s) ; et
$\alpha$ désignant le paramètre d'accord (tuning parameter).

2. Procédé selon la revendication 1, **caractérisé en ce que** les valeurs estimées ($\hat{\mu}_f$, $\hat{\mu}_r$) des paramètres caractérisant les propriétés des pneumatiques qui se trouvent sur l'essieu correspondant sont déterminées conformément aux équations suivantes :

$$\begin{cases} \dot{\hat{\mu}}_f = -e_{v\psi}\dfrac{F_{yf}l_f}{J} = -e_{v\psi}W_f \\[3mm] \dot{\hat{\mu}}_r = e_{v\psi}\dfrac{F_{yr}l_r}{J} = e_{v\psi}W_r \end{cases}$$

où

$e_{v\psi}$ désigne l'erreur de suivi (= $v_{\psi d}$-$v_{\psi}$ ; « tracking error ») et
$W_f$, $W_r$ désignent le facteur de régression pour le changement de direction avec l'essieu avant ou arrière.

**3.** Procédé selon la revendication 1 ou 2, **caractérisé en ce qu'**une valeur moyenne des facteurs caractérisant les propriétés des pneumatiques qui se trouvent sur l'essieu correspondant est déterminée conformément à l'équation suivante

$$\hat{\mu} = \frac{\hat{\mu}_f + \hat{\mu}_r}{2}$$

et supposée comme valeur estimée du coefficient de friction maximum actuel des pneumatiques.

**4.** Procédé selon la revendication 3, **caractérisé en ce qu'**une adaptation en direct du taux de lacet est effectuée en se basant sur cette valeur estimée du coefficient de friction maximum actuel.

**5.** Procédé selon l'une des revendications précédentes, **caractérisé en ce que** la dynamique de conduite du véhicule automobile (5) est décrite par le biais du système d'équations suivant

$$P: \begin{cases} \dot{v}_y = -v_x v_\psi + \dfrac{1}{m}\left(\mu_f F_{yf}(.) + \mu_r F_{yr}(.)\right) \\[3mm] \dot{v}_\psi = \dfrac{1}{J}\left(\mu_f F_{yf}(.)l_f - \mu_r F_{yr}(.)l_r\right) \end{cases}$$

où
m désigne la masse du véhicule (kg) ;
$\mu_f$, $\mu_r$ désignent les paramètres caractérisant les propriétés des pneumatiques qui se trouvent sur l'essieu avant ou sur l'essieu arrière ;
$v_x$ désigne la vitesse longitudinale du véhicule (m/s) ; et
$v_y$ désigne la vitesse transversale du véhicule (m/s).

**6.** Procédé selon l'une des revendications précédentes, **caractérisé en ce que** l'estimation des paramètres caractérisant les propriétés des pneumatiques qui se trouvent sur l'essieu correspondant selon les équations

$$\begin{cases} \dot{\hat{\mu}}_f = -e_{v\psi}\dfrac{F_{yf}l_f}{J} = -e_{v\psi}W_f \\[3mm] \dot{\hat{\mu}}_r = e_{v\psi}\dfrac{F_{yr}l_r}{J} = e_{v\psi}W_r \end{cases}$$

est interrompue lorsque la vitesse transversale dépasse une valeur limite supérieure, $\hat{\mu}_f$ et $\hat{\mu}_r$ étant des valeurs estimées pour les paramètres caractérisant les propriétés des pneumatiques qui se trouvent sur l'essieu corres-

pondant et

$e_{v\psi}$ désignant l'erreur de suivi (= $v_{\psi d}$-$v_\psi$ ; « tracking error ») et

$W_f$, $W_r$ désignant le facteur de régression pour le changement de direction avec l'essieu avant ou arrière.

**7.** Procédé selon l'une des revendications précédentes, **caractérisé en ce que** l'estimation des paramètres caractérisant les propriétés des pneumatiques qui se trouvent sur l'essieu correspondant selon les équations

$$\begin{cases} \dot{\hat{\mu}}_f = -e_{v\psi}\dfrac{F_{yf}l_f}{J} = -e_{v\psi}W_f \\[2ex] \dot{\hat{\mu}}_r = e_{v\psi}\dfrac{F_{yr}l_r}{J} = e_{v\psi}W_r \end{cases}$$

est interrompue lorsqu'au moins l'un des pneumatiques se trouve en saturation, $\hat{\mu}_f$ et $\hat{\mu}_r$ étant des valeurs estimées pour les paramètres caractérisant les propriétés des pneumatiques qui se trouvent sur l'essieu correspondant et $e_{v\psi}$ désignant l'erreur de suivi (= $v_{\psi d}$-$v_\psi$ ; « tracking error ») et

$W_f$, $W_r$ désignant le facteur de régression pour le changement de direction avec l'essieu avant ou arrière.

**8.** Procédé selon la revendication 1, **caractérisé en ce qu'**une estimation des paramètres ($\hat{\mu}_f$, $\hat{\mu}_r$) caractérisant les propriétés des pneumatiques qui se trouvent sur l'essieu correspondant est effectuée au moyen de l'équation

$$\frac{\hat{\mu}_f}{\mu_f}\dot{v}_\psi = v + (\hat{\mu}_r - \mu_r\frac{\hat{\mu}_f}{\mu_f})\frac{l_r F_{yr}(.)}{J}$$

où

$\mu_f$, $\mu_r$ désignent les paramètres caractérisant les propriétés des pneumatiques qui se trouvent sur l'essieu avant ou sur l'essieu arrière ;

$\hat{\mu}_f$ et $\hat{\mu}_r$ désignent des valeurs estimées pour les paramètres caractérisant les propriétés des pneumatiques qui se trouvent sur l'essieu avant ou sur l'essieu arrière.

**9.** Dispositif de régulation du taux de lacet dans un véhicule automobile, ce dispositif étant conçu pour mettre en oeuvre un procédé selon l'une des revendications précédentes.

## Fig. 1

**EP 1 892 175 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0775617 A2